**Europäisches Patentamt**

**European Patent Office**

**Office européen des brevets**

(11) Veröffentlichungsnummer: **0 213 418**
**B1**

(12) **EUROPÄISCHE PATENTSCHRIFT**

(45) Veröffentlichungstag der Patentschrift:
**26.07.89**

(21) Anmeldenummer: **86110699.5**

(22) Anmeldetag: **02.08.86**

(51) Int. Cl.⁴: **G 01 S 3/86**

(54) Verfahren und Vorrichtung zum Peilen von Zielen.

(30) Priorität: **31.08.85 DE 3531231**

(43) Veröffentlichungstag der Anmeldung:
**11.03.87 Patentblatt 87/11**

(45) Bekanntmachung des Hinweises auf die Patenterteilung:
**26.07.89 Patentblatt 89/30**

(84) Benannte Vertragsstaaten:
**DE FR GB IT NL SE**

(56) Entgegenhaltungen:
**GB-A- 2 104 218**

**LEIF BJORNO "UNDERWATER ACOUSTIC AND
SIGNAL PROCESSING", 1980, D. REIDEL PUBLISHING
COMPANY, SEITEN 287-303**

(73) Patentinhaber: **Fried. Krupp Gesellschaft mit
beschränkter Haftung, Altendorfer Strasse 103,
D-4300 Essen 1 (DE)**

(72) Erfinder: **Arens, Egidius, Cordstrasse 13, D-2807 Achim
(DE)**

## Beschreibung

Die Erfindung betrifft ein Verfahren zum Peilen von Zielen der im Oberbegriff des Anspruchs 1 genannten Art und eine Peilanlage zum Ausführen des Verfahrens.

Von einem Trägerschiff wird ein Ziel, beispielsweise ein U-Boot oder Oberflächenschiff, aufgrund seiner Schallabstrahlung mit einer Panoramasonaranlage über eine schwenkbare Richtcharakteristik oder rundum aneinandergrenzende Richtcharakteristiken eingepeilt und geortet. Auf dieses Ziel soll vom Trägerschiff ein Torpedo beispielsweise über einen Lenkdraht gelenkt werden, der den Torpedo mit dem Trägerschiff verbindet. Zum Schutz gegen einen solchen Torpedoangriff werden von U-Booten und Oberflächenschiffen sog. Störer abgesetzt oder nachgeschleppt, die durch Abstrahlen von Schallenergie ein Ziel vortäuschen. Die vom Störer abgestrahlte Schallenergie ist in aller Regel wesentlich lauter als Betriebs- und Fahrtgeräusche des U-Boots oder Oberflächenschiffes, um den Torpedo insbesondere in der Endphase seines Anlaufs anzulocken, wenn auf akustische Eigenlenkung umgeschaltet wird.

Es ist aus einem Artikel «A Review of Adaptive Antennas» aus Nato Advanced Study Institute on Underwater Acoustics and Signal Processing in Denmark, 18. bis 29. August 1980 von Bernard Widrow, Department of Electrical Engineering, Stanford University, Stanford, Californien, bereits bekannt, eine solche Panoramasonaranlage mit einem adaptiven Richtungsbildner zum Erstellen von Richtcharakteristiken auszustatten, bei dem Störgeräusche von Störern in Anwesenheit schwächerer Nutzgeräusche ausgeblendet werden, wenn die Störgeräusche über Nebenkeulen der Richtcharakteristik und die Nutzgeräusche über die Hauptkeule empfangen werden. Durch diese Art der Signalverarbeitung ist es möglich, das Nutz/Störverhältnis wesentlich zu verbessern.

Allerdings versagt dieses Verfahren völlig, wenn der Störer von der Hauptkeule erfaßt wird, da nur über Nebenkeulen einfallende Geräusche weggedämpft werden können und keine Unterscheidung darüber getroffen werden kann, ob das empfangene Geräusch ein Nutzgeräusch ist.

Der Erfindung liegt die Aufgabe zugrunde, ein Verfahren der eingangs genannten Art zu schaffen, das es ermöglicht, eine sichere Zielpeilung zu gewährleisten, auch dann, wenn Störgeräusche über die Hauptkeule der Richtcharakteristik empfangen werden.

Die Aufgabe wird erfindungsgemäß durch die im Kennzeichenteil des Anspruchs 1 angegebenen Merkmale gelöst.

Von einem Wasserfahrzeug, beispielsweise einem Oberflächenschiff, einem U-Boot oder einem Torpedo, werden Betriebsgeräusche abgestrahlt, die vorzugsweise durch die Antriebsaggregate des Wasserfahrzeugs erzeugt werden. Diese Wasserfahrzeuge werden über Propeller angetrieben, die für periodische Lautstärkeschwankungen des gesamten breitbandigen Geräusches im Bereich von einigen Hertz sorgen. Diese Lautstärkeschwankungen sind mit einer Amplitudenmodulation eines Rauschträgers vergleichbar und charakteristisch für jedes propellerbetriebene Wasserfahrzeug. Die Einhüllende des empfangenen Geräusches weist daher Schwankungen auf, da das Geräusch amplitudenmoduliert ist. Wenn über die Hauptkeule einer Richtcharakteristik ein solches Netzgeräusch empfangen wird, sind im zeitlichen Verlauf der Einhüllenden Spektralanteile zu finden, die in einem Abstand zur Frequenz Null liegen, und es wird eine Zielpeilung angezeigt.

Im Gegensatz dazu werden von den üblicherweise eingesetzten Störern Störgeräusche über Schallsender abgestrahlt, denen diese Schwankungen im Verlauf der Einhüllenden fehlen, da der Störer in aller Regel nicht durch einen Propeller angetrieben wird.

Werden über die Hauptkeule der Richtcharakteristik einer Empfangsanlage Störgeräusche empfangen, so wird durch das erfindungsgemäße Verfahren sicher erkannt, daß dieses empfangene Geräusch nicht von einem lohnenden Ziel stammt, da nur auf Ziel erkannt wird, wenn der Rauschträger ein Seitenband aufweist, das Modulationsfrequenzen größer Null besitzt.

Der Vorteil des erfindungsgemäßen Verfahrens zum Peilen von Zielen besteht insbesondere darin, daß die Peilung mit größter Sicherheit erfolgt, da durch die Signalverarbeitung Ziele sicher erkannt werden und nur dann als Zielpeilung angezeigt werden, wenn das Geräusch amplitudenmoduliert ist, während Störer, die von der Hauptkeule empfangen werden, nicht zu einer Zielanzeige führen.

Die Weiterbildung des erfindungsgemäßen Verfahrens nach Anspruch 2 gibt einen Hinweis auf die Peilung eines Störers ab. Das Kriterium für diese Anzeige ist erfüllt, wenn der zeitliche Verlauf der Einhüllenden des empfangenen Geräusches einen Gleichspannungsteil aufweist, nämlich einen Spektralanteil bei der Frequenz Null.

Mit der vorteilhaften Weiterbildung des erfindungsgemäßen Verfahrens nach Anspruch 3 ist eine Analyse jeder Peilung möglich, aus der beispielsweise der zweckmäßigste Einsatz eines Torpedos ableitbar ist, insbesondere auch dann, wenn das Frequenzspektrum des zeitlichen Verlaufs der Einhüllenden bei der Frequenz Null und bei mindestens einer Frequenz im Abstand von Null je eine Spektrallinie aufweist, da dann Ziel und Störer die gleiche Peilung aufweisen.

Mit einer weiteren vorteilhaften Weiterbildung des erfindungsgemäßen Verfahrens nach Anspruch 4 wird für die Analyse der Peilung eine Darstellung gewählt, bei der für jede Frequenz die spektralen Pegel in Anhängigkeit von den Richtcharakteristiken zugeordneten Peilwinkeln angezeigt werden. Legt man über die so dargestellten Spektrallinien eine Hüllkurve, so ist durch Interpolation festzustellen, ob das Ziel unmittelbar mit der Richtung der Hauptkeule einer der Richtcharakteristiken zusammenfällt oder zwischen zwei benachbarten Richtcharakteristiken liegt. Ebenso besteht der Vorteil, sämtliche Störer mit den zugehörigen Peilungen leicht erkennen zu können, da ein solches Diagramm auch für die Frequenz Null angezeigt wird.

Mit der vorteilhaften Weiterbildung des erfindungsgemäßen Verfahrens nach Anspruch 5 wird eine übersichtliche Anzeige erstellt, bei der auf die Peilung eines Ziels mit Störer hingewiesen ist.

Die Weiterbildung des erfindungsgemäßen Verfahrens nach Anspruch 6 hat den Vorteil, daß auch bei geringer Empfangsbandbreite einer zur Durchführung des Verfahrens erforderlichen Empfangsanordnung Ziel und Störer unterschieden werden können, selbst dann, wenn der größte Teil der breitbandig abgestrahlten Schallenergie des Ziels in einem Frequenzbereich liegt, der tiefer als die Empfangsbandbreite ist, da die durch die Amplitudenmodulation verursachten Seitenbänder bei jeder Frequenz des Rauschträgers auftreten und die Peilung nur dann als Zielpeilung ausgegeben wird, wenn eine Amplitudenmodulation im empfangenen Geräusch festgestellt wird. Ein solches Verfahren wäre vorteilhaft in einem Torpedosonar einsetzbar, da hier die geometrischen Abmessungen der Empfangsanordnung klein gewählt werden müssen. Mit einem solchermaßen ausgestalteten Torpedosonar ist der Torpedo über Eigenlenkung in der Lage, das Ziel auch in Anwesenheit von Störern zu erkennen und zu treffen.

Ein weiterer Vorteil des erfindungsgemäßen Verfahrens nach Anspruch 6 liegt darin, daß die Demodulation zum Bestimmen des zeitlichen Verlaufs der Einhüllenden hier besonders einfach durchführbar ist, da das empfangene Geräusch beispielsweise über einen Bandpaß einem Hüllkurvendecoder zugeführt wird, so daß der Träger durch die Mittenfrequenz des Bandpasses genau definiert ist, der für die Demodulation benötigt wird.

Ein weiterer Vorteil des Verfahrens nach Anspruch 6 besteht darin, daß die Empfangsanordnung in einem Frequenzbereich betrieben werden kann, in dem Richtcharakteristiken naturgemäß einen geringen Öffnungswinkel bzw. eine gute Bündelung aufweisen, so daß eine winkelmäßige Trennung von Zielen und Störern besonders elegant durchgeführt werden kann, da die niederfrequenten Anteile des Geräusches nicht unmittelbar empfangen zu werden brauchen.

Ebenfalls ist es möglich, ein mit einer Panoramasonaranlage breitbandig empfangenes Geräusch durch Filterung oder Fast-Fourier-Transformation schmalbandig zu machen und dieses schmalbandige Geräusch bezüglich seiner Hüllkurve zu untersuchen, da auch jedes schmale Teilband des gesamten Geräuschbandes die niederfrequente Information der Antriebsmaschinen enthält. Der Vorteil dieser Signalverarbeitung besteht darin, daß durch die Verkleinerung des Frequenzumfangs auf ein Teilband eine Störbefreiung möglich ist.

Eine Peilanlage zum Ausüben des erfindungsgemäßen Verfahrens ist in Anspruch 7 angegeben. Die Peilanlage enthält eine Empfangsanordnung mit Schallwandlern und einen adaptiven Richtungsbildner, in dem mehrere benachbarte Richtcharakteristiken oder eine schwenkbare Richtcharakteristik gebildet werden. Außerdem ist der adaptive Richtungsbildner in der Lage, bei Schalleinfall über Nebenkeulen an diesen Nebenkeulen Nullstellen zu erzeugen und das dort einfallende Geräusch zu dämpfen. Hinter dem adaptiven Richtungsbildner ist ein Hüllkurvendecoder vorgesehen, der das empfangene Geräusch demoduliert. Mit dem nachgeschalteten Tiefpaß wird das untere Seitenband herausgefiltert und somit die Einhüllende des empfangenen Geräusches gewonnen. In einer Frequenzanalyseschaltung wird der zeitliche Verlauf der Einhüllenden daraufhin untersucht, ob es Spektralanteile bei Frequenzen im Abstand zu Null aufweist. Der Vorteil dieser Peilanlage besteht darin, daß Ziele sicher gepeilt werden und auch dann von Störern unterschieden werden können, wenn mit der Hauptkeule einer der Richtcharakteristiken das Störgeräusch eines Störers empfangen wird.

Mit der Ausführungsform der Peilanlage nach Anspruch 8 und 9 sind einfache Schaltanordnungen zur Realisierung einer Frequenzanalyseschaltung angegeben, wenn es nur darum geht, zu unterscheiden, ob entweder eine Peilung zum Ziel oder zum Störer vorliegt.

Mit der Ausführungsform der Peilanlage nach Anspruch 10 ist ein komplettes Erstellen des Frequenzspektrums des zeitlichen Verlaufs der Einhüllenden des empfangenen Geräusches möglich und somit eine Analyse des empfangenen Geräusches bezüglich Ziel- und/oder Störerpeilung.

Mit der Ausführungsform der Peilanlage nach Anspruch 11 ist eine Peilanzeigeanordnung angegeben, bei der das gesamte Frequenzspektrum über der Frequenz je Peilrichtung dargestellt wird. Zur besseren Übersichtlichkeit ist noch eine spezielle Ziel- und Störermarkierung entsprechend der Ausführungsform nach Anspruch 12 möglich, die eine sichere Zielpeilung gewährleistet.

Mit der Ausführungsform der Peilanlage nach Anspruch 13 ist eine Interpolation der Peilung möglich, wenn das Ziel zwischen zwei benachbarten Richtcharakteristiken liegt.

Mit den vorteilhaften Ausführungsformen der Peilanlage nach Anspruch 14 und 15 ist eine Verwendung einer Empfangsanordnung mit geringen Abmessungen, wie sie beispielsweise in einem Torpedosonar üblich ist, und eine besonders einfache Demodulation des empfangenen Geräusches möglich.

Die Erfindung ist anhand eines in der Zeichnung dargestellten Ausführungsbeispiels für die Peilanlage zum Peilen von Zielen über Richtcharakteristiken dargestellt.

Es zeigen:

Fig. 1 ein Blockschaltbild einer Peilanlage,

Fig. 2 und 3 jeweils eine schematische Darstellung einer Anzeige einer Peilanzeigevorrichtung der Peilanlage gemäß Fig. 1.

Mit einer Empfangsanordnung 10, die beispielsweise aus auf einem Zylinder angeordneten Schallwandlern besteht, werden Geräusche empfangen. Empfangssignale der Schallwandler werden in einem nachgeordneten adaptiven Richtungsbildner 11 so zusammengefaßt, daß über Richtcharakteristiken die Abstrahlrichtung der empfangenen Schallenergie festgestellt werden kann.

Richtcharakteristiken bestehen in aller Regel aus einer Hauptkeule und Nebenkeulen, wie es in der Literatur «A Review of Adaptive Antennas» aus Nato Advanced Study Institute on Underwater Acoustics and Signal Processing in Denmark, 18. bis 29. August 1980 von Bernard Widrow, Department of Electrical Engineering, Stanford University, Stanford Californien, näher beschrieben ist. Mit dem adaptiven Richtungsbildner werden Richtcharakteristiken entsprechend einer gewünschten Peilgenauigkeit hergestellt und jeder Richtcharakteristik ein Peilwinkel zugeordnet, Geräuscheinfall über Nebenkeulen wird so stark gedämpft, daß jedes Richtcharakteristiksignal zur empfangene Geräusche aus der Hauptkeule aufweist, deren Richtung die Peilung angibt.

Mit dem nachfolgend beschriebenen Signalverarbeitungskanal wird die Peilung zum Ziel ermittelt, der hier beispielsweise für eine einzige Richtcharakteristik angegeben ist, für sämtliche anderen Richtcharakteristiken ist jeweils ein gleicher Signalverarbeitungskanal vorzusehen.

Falls mit dem Richtungsbildner 11 eine schwenkbare Richtcharakteristik erstellt wird, ist nur ein einziger solcher Signalverarbeitungskanal notwendig.

Der Signalverarbeitungskanal besteht aus einem Bandpaß 12, dessen Mittenfrequenz so gelegt ist, daß sie in einen Frequenzbereich der Empfangsanordnung fällt, in dem optimaler Empfang gewährleistet ist. Die Bandbreite des Bandpasses 12 ist so dimensioniert, daß das durch Fahrtgeräusche des Ziels üblicherweise auftretende Seitenband des empfangenen amplitudenmodulierten Geräusches den Durchlaßbereich ungedämpft passieren kann.

Die Mittenfrequenz des Bandpasses 12 und der Durchlaßbereich werden deutlich höher als die durch die Abmessungen der Empfangsanordnung 10 definierte untere Grenzfrequenz gewählt.

Dem Bandpaß 12 ist ein Hüllkurvendecoder 13 nachgeschaltet, der das schmalbandige Geräusch mit einer Trägerfrequenz entsprechend der Mittenfrequenz des Bandpasses 12 demoduliert. An dem Hüllkurvendecoder 13 schließt sich ein Tiefpaß 14 an, der das bei der Demodulation entstehende untere Seitenband herausfiltert. Dem Tiefpaß 14 ist eine Frequenzanalyseschaltung 15 nachgeordnet, die mit einer Peilanzeigevorrichtung 16 verbunden ist.

Im einfachsten Fall besteht die Frequenzanalyseschaltung 15 aus einem Hochpaß, der nur spektrale Anteile des Seitenbandes durchläßt, die deutlich über der Frequenz $f = 0$ liegen. Solche Spektralanteile treten auf, wenn die Richtcharakteristik in Richtung eines Ziels weist. Dann leuchtet auf der Peilanzeigevorrichtung 16 eine Zielmarkierung 17 auf, beispielsweise in Form eines Kreises mit Kreuz.

Die Frequenzanalyseschaltung 15 kann aber auch zusätzlich zum Hochpaß einen Tiefpaß enthalten. Wenn die Richtcharakteristik auf einen Störer weist, erscheint am Ausgang des Tiefpasses ein Signal, das zum Ansteuern einer Leuchtanzeige für eine Störermarkierung 18 in der Peilanzeigevorrichtung 16 führt. Die Störermarkierung 18 ist in diesem Fall durch ein leuchtendes Quadrat dargestellt.

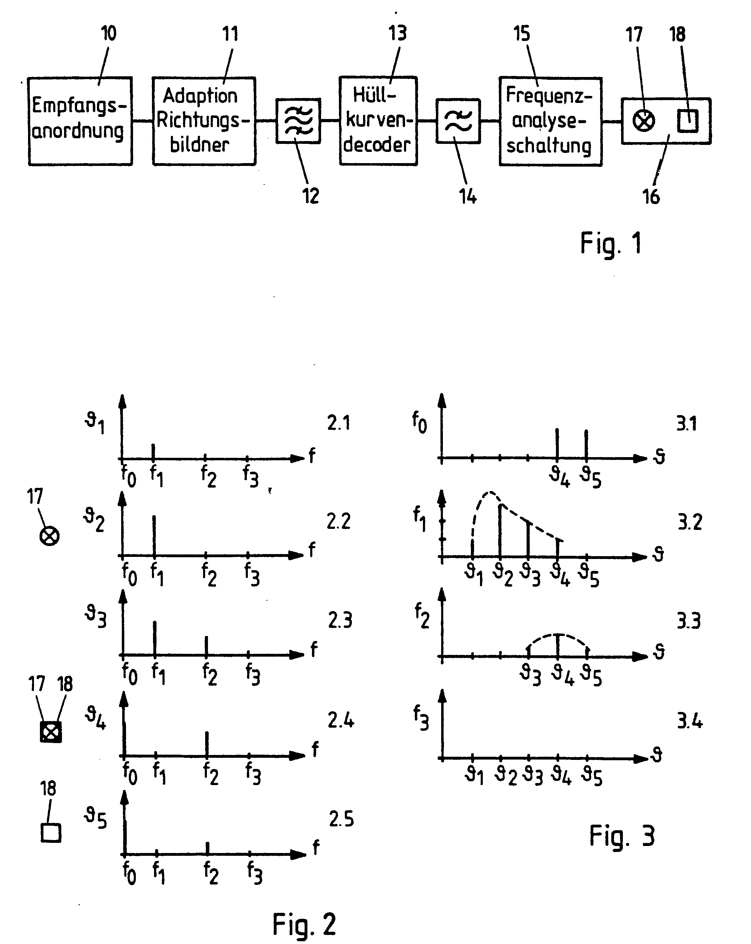

Die Frequenzanalyseschaltung 15 kann auch durch eine Schaltung zum Berechnen der Fourier-Transformation des zeitlichen Verlaufs der Einhüllenden realisiert werden. Auf der Peilanzeigevorrichtung wird dann beispielsweise je Peilung des Frequenzspektrum der Einhüllenden dargestellt (vgl. Fig. 2 und 3).

In Fig. 2 ist eine der Anzeigemöglichkeiten angegeben. Für jede Richtcharakteristik, die in unterschiedliche Richtungen unter Peilwinkeln $\vartheta_1$, $\vartheta_2$, ..., $\vartheta_5$ weisen, ist jeweils ein Diagramm 2.1, 2.2, ..., 2.5 vorgesehen, auf dem Spektrallinien über der Frequenz f dargestellt werden. Das Diagramm 2.1 für den Peilwinkel $\vartheta_1$ zeigt einen geringen spektralen Pegel bei der Frequenz $f_1$. Das Diagramm 2.2 für den Peilwinkel $\vartheta_2$ zeigt einen größeren spektralen Pegel bei der gleichen Frequenz $f_1$ und im Diagramm 2.3 für den Peilwinkel $\vartheta_3$ ist ein wieder kleinerer spektraler Pegel bei der gleichen Frequenz $f_1$ zu verzeichnen. Da die Richtcharakteristiken sehr dicht benachbart zueinander liegen, gehören diese drei spektralen Pegel alle zu einem Ziel, das unter dem Peilwinkel $\vartheta_2$ im wesentlichen einzupeilen ist.

Im Diagramm 2.3 ist noch ein weiterer spektraler Pegel bei der Frequenz $f_2$ zu verzeichnen. Unter dem Peilwinkel $\vartheta_4$ ist gemäß Diagramm 2.4 ein spektraler Pegel bei der Frequenz $f_0 = 0$ zu erkennen und spektrale Pegel mit ansteigender Größe bei den Frequenzen $f_1$ und $f_2$. Im Diagramm 2.5 ist für den Peilwinkel $\vartheta_5$ bei den Frequenzen $f_0 = 0$ und $f_3$ je ein spektraler Pegel zu verzeichnen. Die Diagramme 2.4 und 2.5 zeigen deutlich, daß zwischen den Peilwinkeln $\vartheta_4$ und $\vartheta_5$ ein Störer eingepeilt wird, daß unter dem Peilwinkel $\vartheta_4$ ein weiteres Ziel liegt und daß dieses Ziel sich mit dem Störer zu tarnen versucht. Dieses zweite Ziel ist nämlich bei der Frequenz $f_2$ unter den Peilwinkeln $\vartheta_3$, $\vartheta_4$ und $\vartheta_5$ zu finden und zeigt seinen maximalen Pegel bei dem Peilwinkel $\vartheta_4$.

Das Diagramm 2.2 ist mit einer Zielmarkierung 17, das Diagramm 2.5 mit einer Störermarkierung 18 und das Diagramm 2.4 ist mit einer Zielmarkierung 17 und einer Störermarkierung 18 mit der Bedeutung «Zielpeilung mit zugehörigem Störer» versehen.

Fig. 3 zeigt eine Anzeigeform für die Peilanzeigeanordnung 16, mit der es möglich ist, zwischen Peilwinkeln benachbarter Richtcharakteristiken zu interpolieren. Es werden für jede Frequenz $f_0 = 0$, $f_1$, $f_2$, $f_3$ die spektralen Pegel winkelabhängig aufgezeichnet. Im Diagramm 3.1 sind für die Frequenz $f_0 = 0$ die spektralen Pegel bei den Peilwinkeln $\vartheta_4$ und $\vartheta_5$ dargestellt. Das Diagramm 3.2 für die Frequenz $f_1$ zeigt spektrale Pegel unter den Peilwinkeln $\vartheta_1$, $\vartheta_2$, $\vartheta_3$ und $\vartheta_4$. Wenn man eine Interpolationskurve, bei der die spektralen Pegel Stützstellen sind, in dieses Diagramm 2.2 einzeichnet, erkennt man, daß das Ziel zwischen den Peilwinkeln $\vartheta_1$ und $\vartheta_2$ liegen muß, und zwar näher zum Peilwinkel $\vartheta_2$ als zum Peilwinkel $\vartheta_1$.

Das Diagramm 3.3 zeigt für die Frequenz $f_2$ drei spektrale Pegel bei den Peilwinkeln $\vartheta_3$, $\vartheta_4$ und $\vartheta_5$. Unter dem Peilwinkel $\vartheta_4$ wird ein zweites Ziel gepeilt, das sich, wie das Diagramm 3.1 zeigt, mit einem oder zwei Störern unter den Peilwinkeln $\vartheta_4$ und $\vartheta_5$ zu schützen versucht. Das Diagramm 3.4 zeigt, daß bei der Frequenz $f_3$ kein spektraler Pegel festgestellt wurde.

**Patentansprüche**

1. Verfahren zum Peilen von Zielen, bei dem ein vom Ziel abgestrahltes Nutzgeräusch und gegebenenfalls von einem oder mehreren Störern abgestrahltes Störgeräusch über mindestens eine Richtcharakteristik empfangen werden, wobei die Richtcharakteristik eine Hauptkeule und Nebenkeulen aufweist, und bei dem über eine oder mehrere Nebenkeulen empfangene Geräusche durch eine oder mehrere unter diesen Winkeln in der Richtcharakteristik erzeugte Nullstellen gedämpft werden, dadurch gekennzeichnet, daß der zeitliche Verlauf der Einhüllenden des über die Richtcharakteristik empfangenen Geräusches bestimmt wird, daß der zeitliche Verlauf bezüglich seiner Spektralanteile untersucht wird und daß bei Auftreten von Spektralanteilen bei Frequenzen in einem Abstand zu Null diese Peilung als Zielpeilung angezeigt wird.

2. Verfahren nach Anspruch 1, dadurch gekennzeichnet, daß bei Auftreten von Spektralanteilen bei der Frequenz Null diese Peilung als Peilung zum Störer angezeigt wird.

3. Verfahren nach Anspruch 1 oder 2, dadurch gekennzeichnet, daß für jede Peilung die Spektralanteile über der Frequenz als Frequenzspektrum angezeigt werden.

4. Verfahren nach Anspruch 1 oder 2, dadurch gekennzeichnet, daß für jede Frequenz sämtliche spektralen Pegel über Peilwinkeln, die den Richtcharakteristiken zugeordnet sind, angezeigt werden.

5. Verfahren nach Anspruch 3, dadurch gekennzeichnet, daß ein Frequenzspektrum mit Spektralanteilen bei der Frequenz Null und Frequenzen im Abstand dazu mit einer Markierung für «Zielpeilung mit zugehörigem Störer» versehen wird.

6. Verfahren nach einem der Ansprüche 1 bis 5, dadurch gekennzeichnet, daß das empfangene Geräusch in seinem Frequenzumfang gegenüber dem Frequenzbereich des Nutz- und Störgeräusches eingeschränkt wird.

7. Peilanlage zum Ausüben des Verfahrens nach Anspruch 1, die eine Empfangsanordnung (10) mit einem adaptiven Richtungsbildner (11) für eine schwenkbare Richtcharakteristik oder mehrere benachbarte Richtcharakteristiken mit einstellbaren Nullstellen aufweist, dadurch gekennzeichnet, daß der Ausgang des adaptiven Richtungsbildners (11) mit einem Hüllkurvendecoder (13) und nachgeschaltetem Tiefpaß (14) verbunden ist und daß dem Tiefpaß (14) eine Frequenzanalyseschaltung (15) nachgeschaltet ist, die mit einer Peilanzeigevorrichtung (16) verbunden ist.

8. Peilanlage nach Anspruch 7, dadurch gekennzeichnet, daß die Frequenzanalyseschaltung (15) einen Hochpaß aufweist, dessen Ausgangssignal eine Leuchtanzeige für eine Zielmarkierung (17) in der Peilanzeigevorrichtung (16) steuert.

9. Peilanlage nach Anspruch 8, dadurch gekennzeichnet, daß die Frequenzanalyseschaltung (15) einen Tiefpaß aufweist, dessen Ausgangssignal eine Leuchtanzeige für eine Störermarkierung (18) in der Peilanzeigevorrichtung (16) steuert.

10. Peilanlage nach Anspruch 7, dadurch gekennzeichnet, daß die Frequenzanalyseschaltung (15) eine Rechenschaltung zum Berechnen des Frequenzspektrums aufweist.

11. Peilanlage nach Anspruch 10, dadurch gekennzeichnet, daß die Peilanzeigevorrichtung (16) für jede Richtcharakteristik eine Spektrumsanzeige (2.1 - 2.5) aufweist, bei der als unabhängige Variable die Frequenz und als unabhängige Variable der Spektralpegel des Frequenzspektrums dargestellt sind.

12. Peilanlage nach Anspruch 11, dadurch gekennzeichnet, daß jede Spektrumsanzeige (2.1 - 2.5) eine Leuchtanzeige für eine Zielmarkierung (17) und/ oder für eine Störermarkierung (18) aufweist.

13. Peilanlage nach Anspruch 10, dadurch gekennzeichnet, daß die Peilanzeigevorrichtung (16) für jede Frequenz eine Winkelanzeige (3.1 - 3.4) aufweist, bei der als unabhängige Variable alle den Richtcharakteristiken entsprechende Peilwinkel und als abhängige Variable die für diese Frequenz ermittelten spektralen Pegel dargestellt sind.

14. Peilanlage nach einem der Ansprüche 7 bis 13, dadurch gekennzeichnet, daß zwischen dem Ausgang des adaptiven Richtungsbildners (11) und dem Hüllkurvendecoder (13) ein Bandpaß (12) angeordnet ist.

15. Peilanlage nach Anspruch 14, dadurch gekennzeichnet, daß der Durchlaßbereich des Bandpasses (12) oberhalb einer durch die Abmessung der Empfangsanordnung vorgegebenen unteren Grenzfrequenz liegt.

## Claims

1. Method for measuring the bearings of targets by means of beam patterns, such that sound radiated by the target and (if applicable) signals radiated by one or more decoys are received via at least one beam pattern consisting of a main lobe and side lobes, and such that sounds received via one or more side lobes are attenuated by one or more zero points generated at these angles in the beam pattern, characterised in that the time variation of the envelope of sound received via the beam pattern is determined, the time variation is investigated to find its spectral components, and if spectral components occur at non-zero frequencies then this bearing is displayed as the target bearing.

2. Method corresponding to claim 1, characterised in that if spectral components occur at zero frequency, then this bearing is displayed as the bearing of the decody.

3. Method corresponding to claim 1 or 2, characterised in that, for every bearing, the spectral components are displayed versus frequency to produce a frequency spectrum.

4. Method corresponding to claim 1 or 2, characterised in that, for every frequency, all spectral levels are displayed versus bearing angles assigned to the beam patterns.

5. Method corresponding to claim 3, characterised in that a frequency spectrum with spectral components at zero frequency and at non-zero frequencies is given a marker for «target bearing with associated decoy».

6. Method corresponding to claims 1 to 5, characterised in that the frequency band of the received sound is reduced in comparison with the frequency range of the sound radiated by the target and signals radiated by the decoy(s).

7. Detection equipment for applying the method of claim 1, consisting of a receiving array with an adaptive beamformer for a scanning beam pattern or several adjacent beam patterns with adjustable zero points, characterised in that the output of the adaptive beamformer (11) is connected to an envelope decoder (13) and a following low-pass filter (14), and that the low-pass filter (14) is followed by a frequency analysis circuit (15), which is connected to a bearing display device (16).

8. Detection equipment corresponding to claim 7, characterised in that the frequency analysis circuit (15) has a high-pass filter, the output signal of which controls a light-emitting display for a target marker (17) in the bearing display device (16).

9. Detection equipment corresponding to claim 8, characterised in that the frequency analysis circuit (15) has a low-pass filter, the output signal of which controls a light-emitting display for a decoy marker (18) in the bearing display device (16).

10. Detection equipment corresponding to claim 7, characterised in that the frequency analysis circuit (15) has a computing circuit to compute the frequency spectrum.

11. Detection equipment corresponding to claim 10, characterised in that, for each beam pattern, the bearing display device (16) has a spectrum display (2.1 - 2.5) in which the frequency is displayed as the independent variable, and the spectral level of the frequency spectrum is displayed as the dependent variable.

12. Detection equipment corresponding to claim 11, characterised in that each spectrum display (2.1 - 2.5) has a light-emitting display for a target marker (17) and/or for a decoy marker (18).

13. Detection equipment corresponding to claim 10, characterised in that, for every frequency, the bearing display device (16) has an angle display (3.1 - 3.4) in which all of the bearing angles corresponding to the beam patterns are displayed as the independent variable, and the spectral levels determined for this frequency are displayed as the dependent variable.

14. Detection equipment corresponding to claims 7 to 13, characterised in that there is a band-pass filter (12) between the output of the adaptive beamformer (11) and the envelope decoder (13).

15. Detection equipment corresponding to claim 14, characterised in that the pass band of the band-pass filter (12) lies above a lower cut-off frequency defined by the dimensions of the receiving array.

## Revendications

1. Procédé prévu pour la détermination du relèvement d'objectifs au moyen des caractéristiques de faisceau dans lequel un bruit utile émis par l'objectif et éventuellement un bruit interférent émis par un ou plusieurs perturbateurs sont reçus par l'intermédiaire d'au moins une caractéristique de faisceau dans quel cas la caractéristique de faisceau présente un lobe principal et des lobes latéraux et dans lequel les bruits reçus au moyen d'un ou de plusieurs lobes latéraux sont atténués par une ou plusieurs positions zéro produites à ces angles de la caractéristique de faisceau et en outre caractérisé par le fait que le déroulement dans le temps de l'enveloppe du bruit reçu au moyen de la caractéristique de faisceau est déterminé et que le déroulement dans le temps est étudié en ce qui concerne ses parties spectrales et que lorsqu'apparaissent des parties spectrales à un intervalle par rapport à zéro, ce relèvement est affiché en tant que relèvement d'objectif.

2. Procédé conformément à la revendication 1, caractérisé par le fait que lors de l'apparition de parties spectrales à la fréquence zéro, ce relèvement est affiché en tant que relèvement du perturbateur.

3. Procédé conformément à la revendication 1 ou 2, caractérisé par le fait que les parties spectrales de toute la fréquence sont pour chaque relèvement affichée en tant que spectre de fréquence.

4. Procédé selon revendication 1 ou 2, caractérisé par le fait que tous les niveaux de spectre relatifs aux angles de relèvement affectés aux caractéristiques des faisceaux sont affichés pour chaque fréquence.

5. Procédé selon revendication 3, caractérisé par le fait qu'un spectre de fréquence à parties est à la fréquence zéro et à des fréquences apparaissant à un certain intervalle, doté d'un marquage pour relèvement d'objectif avec perturbateur correspondant.

6. Procédé selon une des revendications 1 à 5, caractérisé par le fait que le bruit reçu est en ce qui concerne sa bande de fréquence limité par rapport à la gamme de fréquences du rapport signal/bruit.

7. Détecteur de relèvement pour l'application du procédé selon revendication 1, présentant une disposition de réception à formateur de faisceaux adaptatif conçu pour une caractéristique de faisceau orientable ou plusieurs caractéristiques de faisceaux voisines à positions zéro réglables et caractérisé par le fait que la sortie du formateur de faisceau adaptatif (11) est relié à un décodeur de courbe enveloppante (13) et d'un filtre passe-bas (14) aval et que ledit filtre passe-bas (14) dispose d'un circuit analyseur de fréquence (15) aval relié à un dispositif d'affichage de relèvement (16).

8. Détecteur de relèvement selon revendication 7, caractérisé par le fait que le circuit analyseur de fréquence (15) présente un filtre passe-haut dont le signal de sortie commande un affichage lumineux pour un systeme de marquage d'objectif (17) situé dans le dispositif d'affichage de relèvement (16).

9. Détecteur de relèvement selon revendication 8, caractérisé par le fait que le circuit analyseur de fréquence (15) présente un filtre passe-bas dont le signal de sortie commande l'affichage lumineux d'un système de marquage de perturbateur 18 situé dans le dispositif d'affichage de relèvement (16).

10. Détecteur de relèvement selon revendication 7, caractérisé par le fait que le circuit analyseur de fréquence (15) présente un circuit calculateur destiné à calculer le spectre de fréquence.

11. Détecteur de relèvement selon revendication 10, caractérisé par le fait que le dispositif d'affichage de relèvement (16) présente pour chaque caractéristique de faisceau un affichage de spectre (2.1 - 2.5) dans lequel la fréquence est representée en tant que variable indépendante et le niveau spectral du spectre de fréquence en tant que variable dépendante.

12. Détecteur de relèvement selon revendication 11, caractérisé par le fait que chaque affichage de spectre (2.1 - 2.5) présente un affichage lumineux pour un marquage d'objectif (17) et/ou pour un marquage de perturbateur (18).

13. Détecteur de relèvement selon revendication 10, caractérisé par le fait que le système d'affichage de relèvement (16) présente pour chaque fréquence un affichage d'angle (3.1 - 3.4) dans lequel tous les angles de relèvement correspondant aux caractéristiques de faisceau sont representés en tant que variable indépendante et les niveaux des spectres déterminés pour ces fréquences en tant que variable dépendante.

14. Détecteur de relèvement selon une des revendications 7 à 13, caractérisé par le fait qu'un filtre passe-bande (12) a été disposé entre la sortie du formateur de faisceau adaptatif (11) et le décodeur de courbe enveloppante (13).

15. Détecteur de relèvement selon revendication 14, caractérisé par le fait que le secteur de passage du filtre passe-bande (12) se situe au-dessus d'une fréquence limite basse déterminée par les cotes de la disposition de réception.

Fig. 1

Fig. 2

Fig. 3